# EUROPÄISCHE PATENTSCHRIFT

(11) **EP 1 004 423 B1**
(45) Veröffentlichungstag und Bekanntmachung des Hinweises auf die Patenterteilung: **26.03.2003**
(21) Anmeldenummer: 99122998.0
(22) Anmeldetag: 19.11.1999
(51) Int. Cl.: B29C 47/22

(54) **Verfahren und Vorrichtung zum Extensionsblasformen von Kunststoffbehältern mit unterschiedlichen Behälterquerschnitten**
Method and apparatus for extrusion blow moulding of plastic containers having varying cross-sections
Méthode et appareil pour l'extrusion-soufflage de recipients en plastique à section variable

(30) Priorität: 24.11.1998 DE 19854249
(43) Veröffentlichungstag der Anmeldung: 31.05.2000
(73) Patentinhaber: Feuerherm, Harald, D-53840 Troisdorf (DE)
(72) Erfinder: Feuerherm, Harald, D-53840 Troisdorf (DE)
(74) Vertreter: Albrecht, Rainer Harald, Dr.-Ing.

(56) Entgegenhaltungen:
- EP-A- 0 478 957
- GB-A- 1 004 332
- ING.(GRAD.) VOLKER VOELZ: "Beeinflussung der Wanddicke bei der Hohlkörperfertigung" PLASTVERARBEITER, Bd. 32, Nr. 3, 1981, Seiten 326-330, XP002133045
- VOLKER VOELZ & HARALD FEUERHERM: "Produktionssichere Hohlkörperfertigung durch optimale Vorformlingsgestaltung" KUNSTSTOFFBERATER,DE,KUNSTSTOFF VERLAG. ISERNHAGEN, Bd. 28, Nr. 1/02, Januar 1983 (1983-01), Seiten 17-22, XP002107838 ISSN: 0172-6374

## Beschreibung

Die Erfindung betrifft ein Verfahren zum Extrusionsblasformen von Kunststoffbehältern mit unterschiedlichen Behälterquerschnitten.

Bei einem aus Plastverarbeiter 32 (1981) 3, Seiten 326 bis 330) bekannten Verfahren, von dem die Erfindung ausgeht, wird die Schmelzeverteilung in Umfangsrichtung durch eine in unmittelbarer Nähe des Düsenaustrittes angeordnete Stelleinrichtung nach einem radialen Wanddickenstellprogramm geregelt. Die Stelleinrichtung ist an einem unteren Düsenring der Ringspaltdüse angeordnet und weist eine elastisch verformbare Hülse sowie radial auf die Hülse einwirkende Betätigungselemente auf, deren Stellbewegungen von einem radialen Wanddickenstellprogramm (RWDS) gesteuert werden. Die Anordnung hat sich in funktionsmäßiger Hinsicht bewährt. Wenn zur Fertigung größerer und kleinerer Behälter der Düsendurchmesser des Strangpreßkopfes verändert werden muß, muß allerdings die aus einem Düsenring, einer elastischen Hülse sowie den Aktuatoren bestehende Baugruppe komplett ausgewechselt werden. Die Umrüstung ist aufwendig und die Lagerhaltung mehrerer, jeweils aus einem Düsenring, einem elastischen Ring und Aktuatoren bestehender Baugruppen mit erheblichen Investitionskosten verbunden.

Aus EP-B 0 478 957 ist ein Strangpreßkopf zum Extrusionsblasformen von Kunststoffbehältern bekannt, der oberhalb einer Ringspaltdüse eine auf den Schmelzekanal einwirkende Stelleinrichtung zur Beeinflussung der Schmelzeverteilung in Umfangsrichtung aufweist. Die Stelleinrichtung besteht aus im Inneren des Strangpreßkopfes angeordneten, in Längsrichtung relativ zueinander verschiebbaren Profilringen. Düse und Dorn begrenzen einen kreisringförmigen Düsenspalt, dessen Spaltbreite durch axiale Stellbewegung des Dorns veränderbar ist. Zur Fertigung von Hohlkörpern mit geometrisch ähnlichem Behälterquerschnitt und unterschiedlichen Behälterdurchmessern werden die Düse und der Dorn ausgewechselt. Wenn Kunststoffhohlkörper mit unterschiedlichen Querschnittsformen gefertigt werden müssen, ist jedoch ein Austausch der im Kopfinneren nur schwer zugänglichen Profilringe erforderlich. Diese Umrüstung ist aufwendig. Ein funktionsmäßiger Nachteil ergibt sich ferner daraus, daß die Stelleinrichtung zur Beeinflussung der Schmelzeverteilung mit einem großen Abstand zum Düsenaustrittsspalt angeordnet ist. Mit zunehmendem Abstand vom Düsenaustrittsspalt nimmt das Erinnerungsvermögen der Schmelze an die durch die Stelleinrichtung bewirkte Beeinflussung ab. Genauigkeit und Reproduzierbarkeit, mit der das Querschnittsprofil des aus der Düse austretenden thermoplastifizierten Vorformlings eingestellt werden kann, sind noch verbesserungsbedürftig.

Der Erfindung liegt die Aufgabe zugrunde, ein Verfahren zum Extrusionsblasformen von Kunststoffbehältern anzugeben bei welchem die am Strangpreßkopf erforderlichen Umstellungen schnell und mit geringem technischen Aufwand durchgeführt werden können, wenn Kunststoffbehälter mit unterschiedlichen Querschnittsformen und/oder unterschiedlichen Behälterdurchmessern gefertigt werden müssen.

Die Aufgabe wird durch das Verfahren gemäß Anspruch 1 gelöst. Erfindungsgemäß werden mit einer oberhalb der Ringspaltdüse oder eines austauschbaren Düseneinsatzes angeordneten Stelleinrichtung Dick- und Dünnstellen an Vorformlingsabschnitten erzeugt, die in der Blasform im wesentlichen zum Behälteroberteil und Behälterunterteil aufgeweitet werden. Während der Extrusion des Vorformlingsabschnittes, welcher dem Behältermittelteil zwischen Kopf und Behälterboden zugeordnet ist, ist die Stelleinrichtung bei symmetrischen Behältern weitgehend ohne Wirkung. Die Profilierung des Vorformlings erfolgt in diesem Bereich mittels eines vorprofilierten Düsenkörpers bzw. Düseneinsatzes und/oder eines vorprofilierten Dorns oder durch Einstellungen an Stellelementen die dicht vor dem Düsenaustritt und vorzugsweise direkt am Düsenaustritt angeordnet sind. Düseneinsatz und Dorn sind ohne Ausbau des Düsenoberteils und der Stelleinrichtung leicht auswechselbar und Teile eines Elementensatzes, auf den zum Zwecke der Umrüstung des Strangpreßkopfes zurückgegriffen werden kann. Mit geringem Aufwand sind die erforderlichen Umrüstarbeiten ausführbar, wenn Behälter mit beispielsweise quadratischen, rechteckigen, und gegebenenfalls anderen, von einer zylinderischen Form abweichenden Behälterquerschnitten gefertigt werden müssen.

Gegenstand der Erfindung ist auch ein Strangpreßkopf mit den Merkmalen des Anspruches 2 und als alternative Ausführung, mit den Merkmalen des Anspruches 3. Die Ansprüche 4 bis 13 bevorzugen konstruktive Ausführungen.

Im folgenden wird die Erfindung anhand von Ausführungsbeispielen darstellenden Zeichnungen ausführlich erläutert. Es zeigen schematisch
- **Fig. 1a**: den Längsschnitt durch einen Strangpreßkopf,
- **Fig. 1b**: einen Querschnitt durch die in Fig. 1 dargestellte Vorrichtung in der Schnittebene A-A,
- **Fig. 2a bis 7a**: weitere Ausführungen der erfindungsgemäßen Vorrichtung, jeweils in einem hälftigen Längsschnitt,
- **Fig. 2b bis 7b**: Querschnitte durch die in den Fig.2a bis 7a dargestellten Vorrichtungen in den angegebenen Schnittebenen,
- **Fig. 8a bis 8e**: typische Querschnittsformen der unter Verwendung der in den Figuren dargestellten Vorrichtungen durch Extrusionsblasformen herstellbaren Kunststoffbehälter.

Die in den Figuren dargestellten Vorrichtungen werden zum Extrusionsblasformen von Kunststoffbehältern, die unterschiedliche Behälterquerschnitte aufweisen können, eingesetzt. Dabei wird ein schlauchförmiger Vorformling aus einer thermoplastischen Kunststoffschmelze aus einem Strangpreßkopf extrudiert und in einer nicht dargestellten Blasform zu einem Kunststoffbehälter aufgeweitet. Zum grundsätzlichen Aufbau des Strangpreßkopfes gehören ein Gehäuse 1, eine Pinole 2, ein ringförmiger Schmelzekanal 3, eine Ringspaltdüse 4 sowie eine auf den Schmelzekanal einwirkende Stelleinrichtung 5 zur Veränderung der Schmelzekanalgeometrie. Die Ringspaltdüse 4 besteht aus einem Düsenoberteil 6, das durch einen Düsenhaltering 7 an das Gehäuse 1 angeschlossen ist, einem ringförmigen Düseneinsatz 8 sowie einem axialbeweglichen Dorn 9. Der Düseneinsatz 8 und der Dorn 9 begrenzen einen Düsenspalt, dessen Spaltbreite durch axiale Stellbewegungen des Dorns 9 während der Extrusion eines thermoplastischen Vorformlings nach einem Wanddickenstellprogramm WDS geregelt wird. Die Stelleinrichtung 5 wirkt oberhalb des Düseneinsatzes 8 auf den Schmelzekanal 3 ein und führt während der Extrusion des Vorformlings von einem radialen Wanddickenstellprogramm RWDS gesteuerte Stellbewegungen aus.

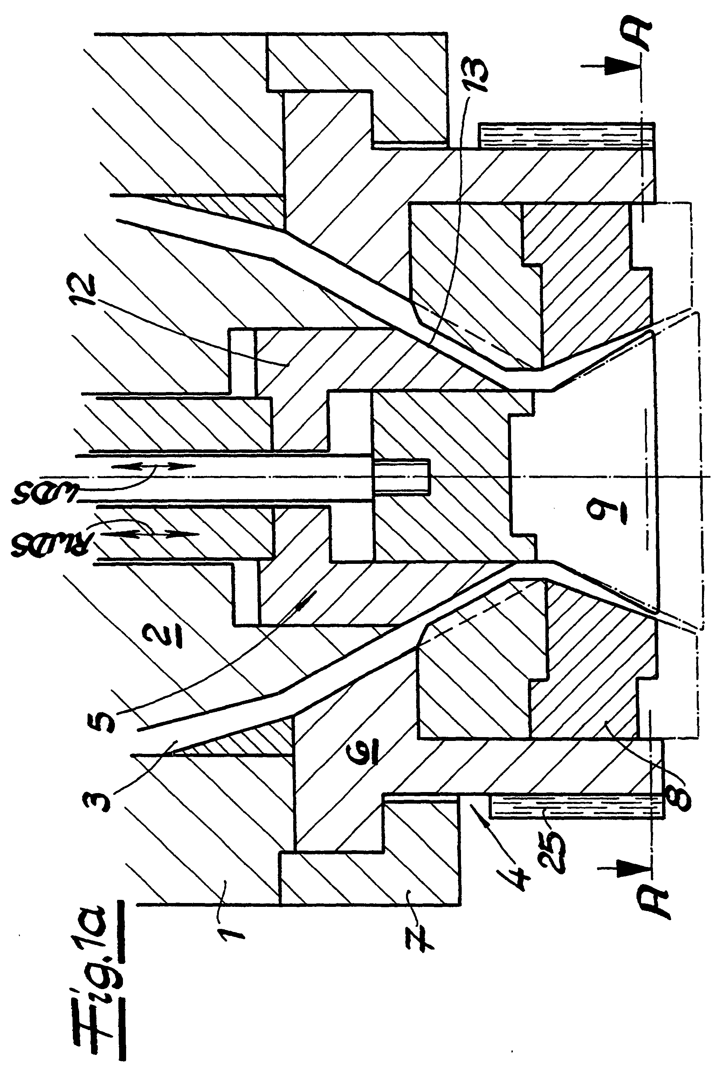

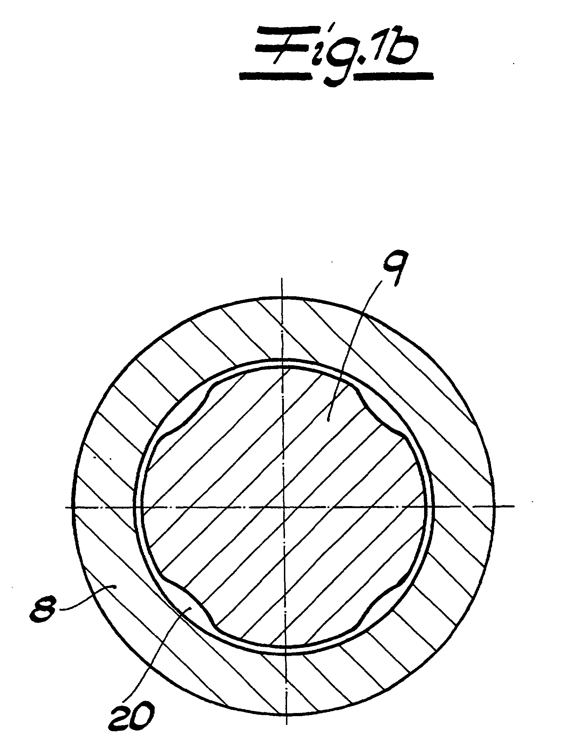

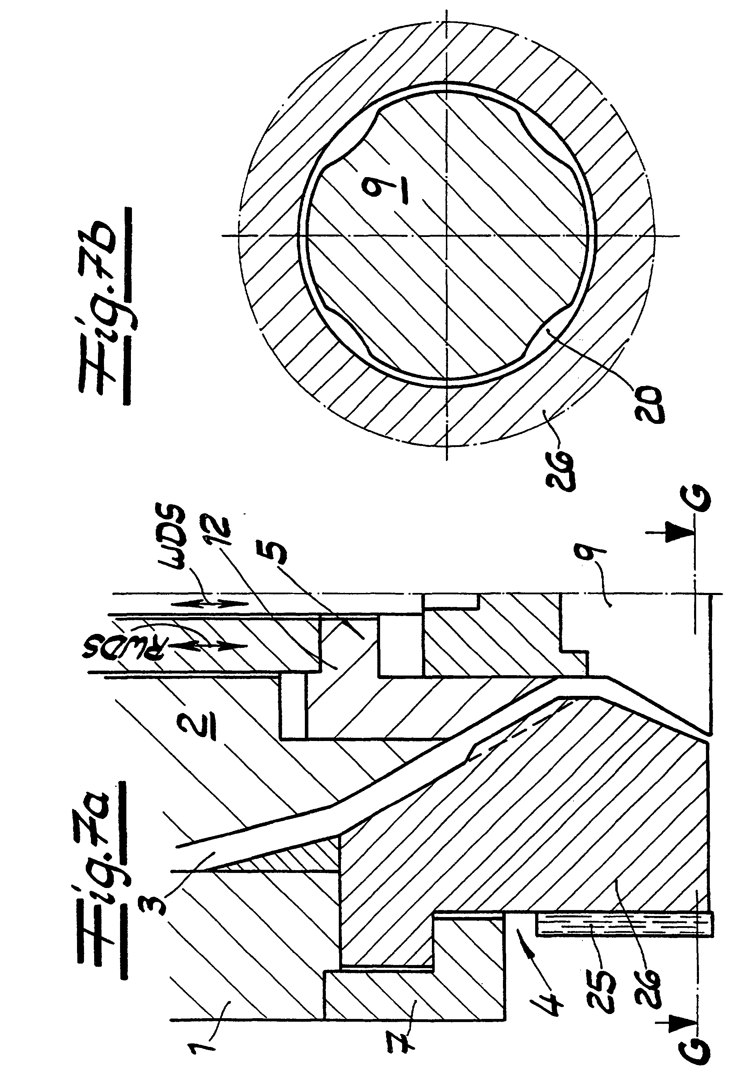

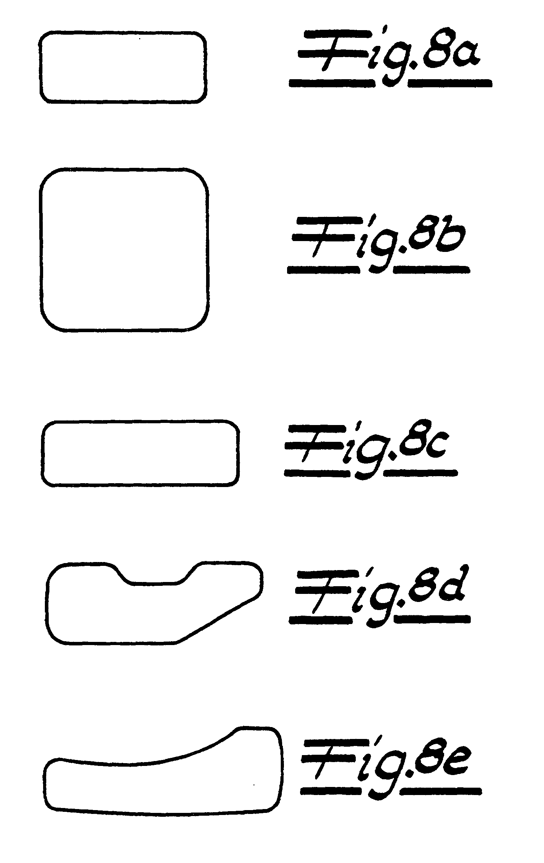

Die endseitigen Abschnitte des Vorformlings, die in der Blasform zu einem Behälteroberteil und Behälterunterteil aufgeweitet werden, werden nach dem radialen Wanddickenstellprogramm (RWDS) durch Stellbewegungen der auf den Schmelzekanal 3 einwirkenden Stelleinrichtung 5 5 geformt. Die Stelleinrichtung 5 wird dabei in einer für verschiedene Größen und Formen des Behälterquerschnittes unveränderten Ausführung verwendet. Die Figuren 1a/1b bis 6a/6b zeigen beispielhaft konstruktive Ausgestaltungen dieser Stelleinrichtung.

Es ist bekannt, eine Mehrzahl von Strangpreßköpfen nebeneinander als Mehrfach-Blasformkopf anzuordnen (Plastverarbeiter 44 (1993) Nr. 2, Seite 28). Bei einer solchen Ausführung können die den Strangpreßköpfen zugeordneten Stelleinrichtungen mechanisch miteinander gekoppelt sein, um die Zahl der erforderlichen, teuren Antriebe zu reduzieren.

Der Düseneinsatz 8 und/oder der Dorn 9 weisen je nach konstruktiver Ausführung der Vorrichtung ein Querschnittsprofil auf, welches Dick- und Dünnstellen im Schmelzefluß erzeugt, oder sind mit einer flexiblen Manschette 10 zur Veränderung der Düsenspaltgeometrie versehen oder mit einer in den Fließbereich eingreifenden, verstellbaren Profilierungseinrichtung 11 ausgerüstet. Die verschiedenen konstruktiven Ausführungen werden anhand der Figuren nachfolgend noch näher erläutert. Der Düseneinsatz 8 und der Dorn 9 sind als ein oder mehrteilige Bauteile ohne Ausbau des Düsenoberteils 6 und der Stelleinrichtung 5 auswechselbar, so daß der Durchmesser und die Geometrie der Ringspaltdüse 4 im Bereich des Düseneinsatzes 8 nach Maßgabe des zu fertigenden Behälterquerschnitts verändert werden kann. Die Figuren 8a bis 8e zeigen typische Querschnittsformen der in einer Blasform aufgeweiteten, fertigen Hohlkörper. Zur Fertigung dieser Hohlkörper müssen die Vorformlinge ein Wanddickenprofil aufweisen, welches den unterschiedlichen Reckwegen bei der Aufweitung in der Blasform Rechnung trägt, damit der fertige Hohlkörper eine annähernd konstante Wandstärke besitzt. Das Wanddickenprofil der schlauchförmigen Vorformlinge ist abhängig von dem zu fertigenden Behälterquerschnitt unterschiedlich. Die Einstellung ist nach dem erfindungsgemäßen Verfahren und mit der in den Figuren dargestellten Vorrichtung ohne Umrüstung der Stelleinrichtung 5 allein durch Austausch der Düseneinsätze 8 und/oder des Dorns 9 oder durch Betätigung von Stellelementen des Düseneinsatzes oder des Dorns, welche die Geometrie des Düsenspaltes verändern, möglich.

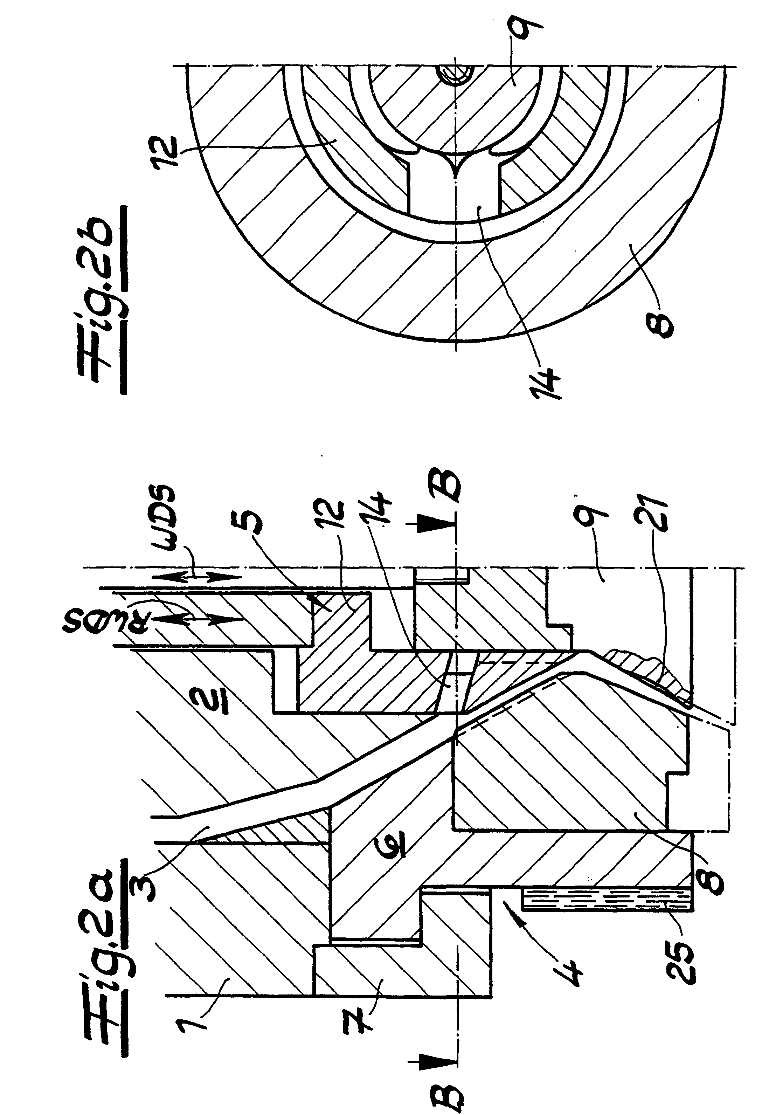

Für die konstruktive Ausgestaltung der oberhalb des Düseneinsatzes 8 auf den Schmelzekanal 3 einwirkenden Stelleinrichtung 5 bieten sich verschiedene Möglichkeiten an. Bei der in Fig. 1a dargestellten Ausführung weist die Stelleinrichtung einen als Hülse 12 ausgebildeten Schieber auf, der in der Pinole 2 axial beweglich geführt ist und eine kegelförmige Stirnfläche 13 aufweist. Die Stirnfläche 13 des Schiebers 12 und/oder ein gegenüberliegender konischer Abschnitt der Ringspaltdüse ist in Umfangsrichtung profiliert. Profiliert heißt, daß am Umfang in Fließrichtung ausgerichtete Vertiefungen und Erhebungen, welche Dickstellen und Dünnstellen im Schmelzefluß erzeugen, vorgesehen sind. Der Schieber kann auch, wie in den Fig. 2a und 2b dargestellt, By-Pass-Kanäle 14 aufweisen, welche die Schmelzeverteilung am Umfang des Schiebers 12 beeinflußt.

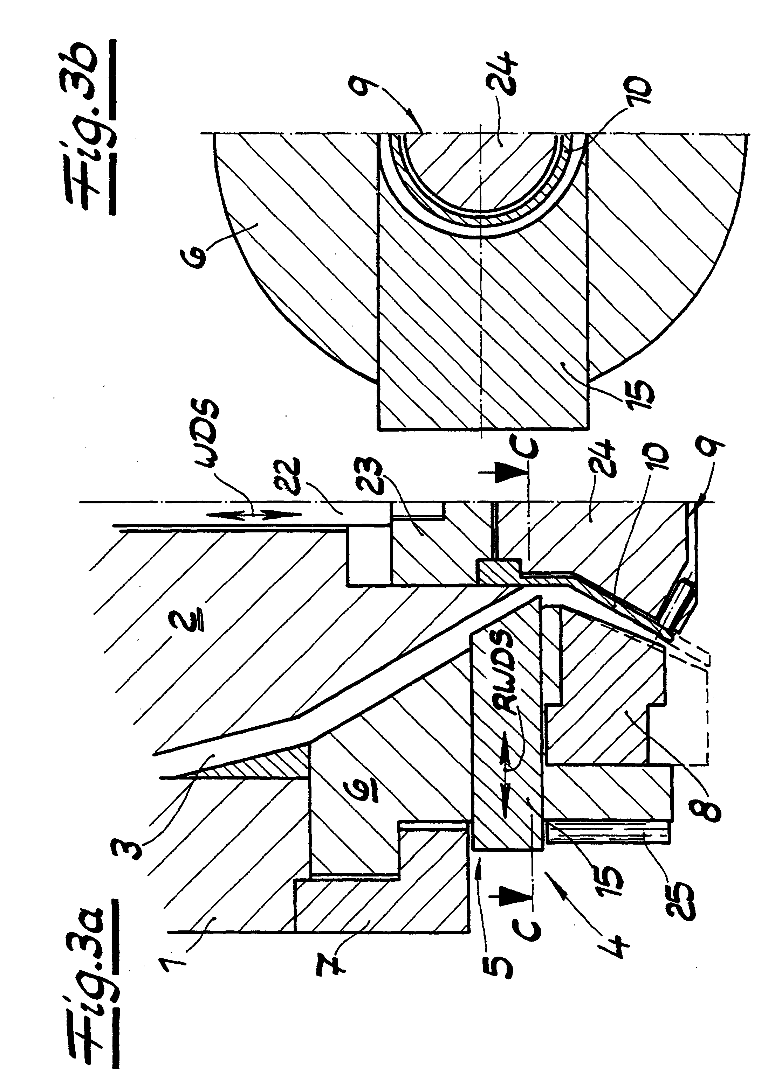

Eine weitere Ausführung der oberhalb des Düseneinsatzes 8 auf den Schmelzekanal 3 einwirkenden Stelleinrichtung 5 ist in den Fig. 3a und 3b dargestellt. Die Stelleinrichtung 5 weist bei dieser Ausführung im Düsenoberteil 6 geführte, radial bewegliche Schieber 15 auf. Je nach Schieberstellung ist die Abweichung des Schmelzekanalquerschnitts von einem kreisringförmigen Spalt mehr oder weniger stark ausgeprägt (Fig. 3b).

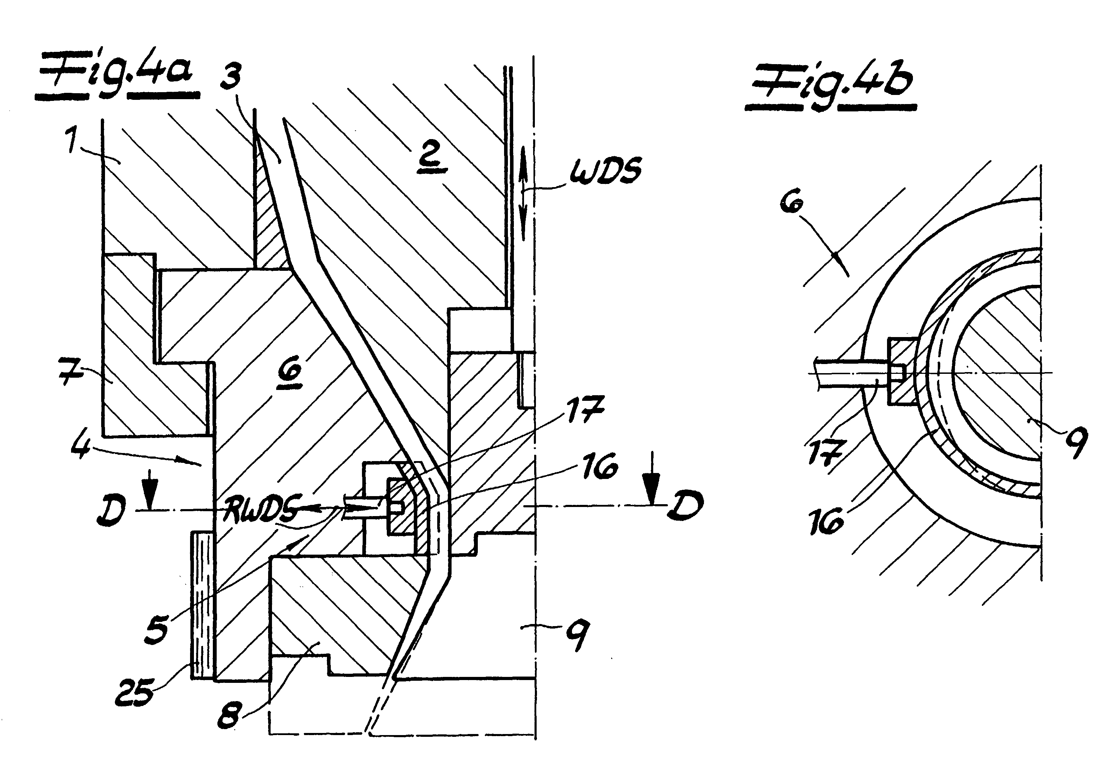

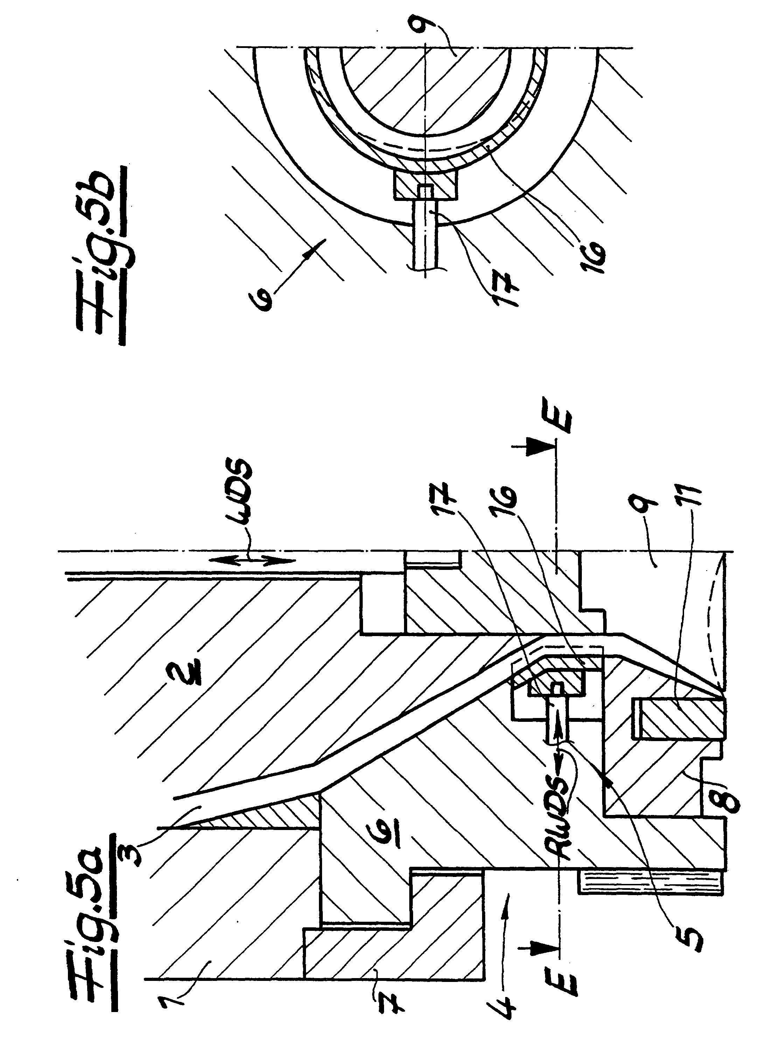

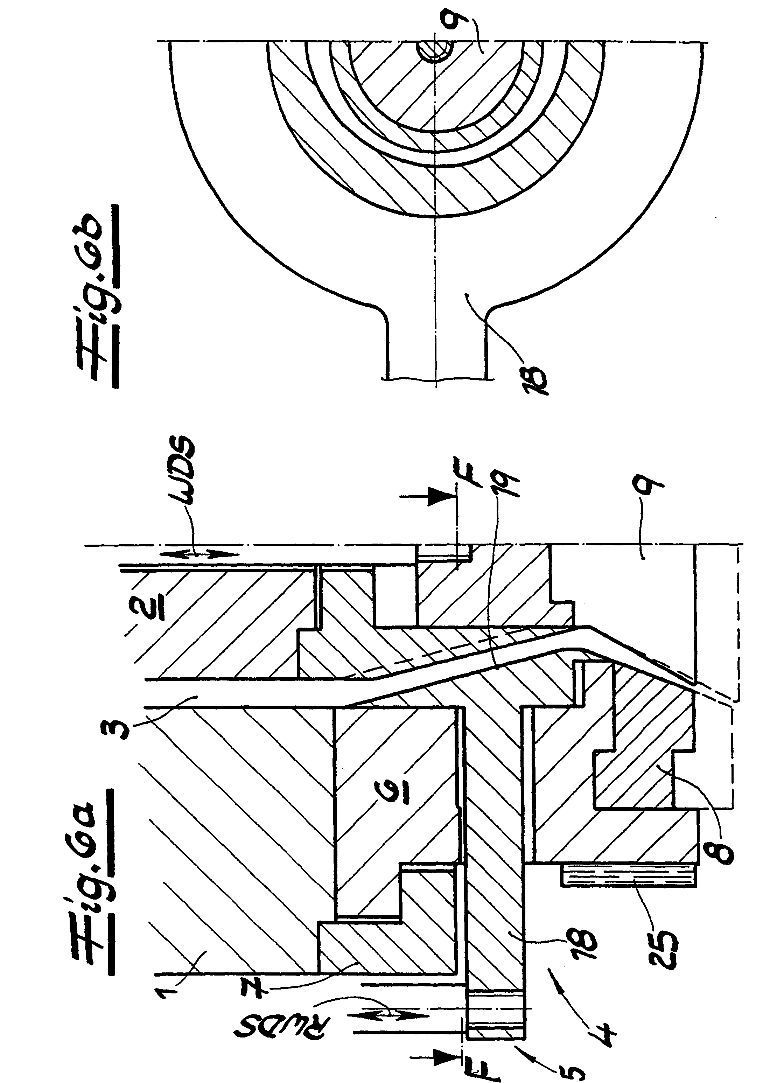

Gemäß einer bevorzugten Ausführung, die in den Fig. 4a und 4b dargestellt ist, weist die oberhalb des Düseneinsatzes 8 auf den Schmelzekanal 3 einwirkende Stelleinrichtung 5 eine den Schmelzekanal begrenzende elastische Hülse 16 auf, die über im wesentlichen radiale Stellelemente 17 verformbar ist. Die Stellbewegungen der auf die Hülse 16 einwirkenden Stellelemente 17 werden nach dem radialen Wanddickenstellprogramm RWDS während des Schlauchaustritts geregelt. Bei den in den Fig. 4a und 5a dargestellten Ausführungen des Strangpreßkopfes ist die elastisch verformbare Hülse 16 im Düsenoberteil 6 angeordnet.

Die Fig. 6a/6b zeigen eine nach dem radialen Wanddickenstellprogramm RWDS gesteuerte Stelleinrichtung 5 mit einem im Düsenoberteil 6 axial beweglichen Stellring 18, dessen konische Ringfläche 19 einen Wandabschnitt des Schmelzekanals bildet. Die konische Ringfläche 19 und/oder ein gegenüberliegender konischer Abschnitt der Pinole 2 ist am Umfang in Fließrichtung profiliert.

Die nach dem radialen Wanddickenstellprogramm RWDS gesteuerte Stelleinrichtung 5 oberhalb des Düseneinsatzes 8 dient zur Formung der Vorformlingsabschnitte, die nach der Aufweitung des Vorformlings in der Blasform im wesentlichen ein Behälterunterteil und ein Behälteroberteil des fertigen Hohlkörpers bilden. Die Wanddickenprofilierung des Vorformlingabschnittes, der nach der Aufweitung in der Blasform einen Behälterabschnitt zwischen Behälteroberteil und Behälterboden bildet, erfolgt im Bereich des Düseneinsatzes 8, vorzugsweise in unmittelbare Nähe des Düsenaustritts. Die Profilierung dieses Vorformlingabschnittes richtet sich nach dem zu fertigenden Behälterquerschnitt und muß angepaßt werden, wenn Behälter mit unterschiedlich geformten Behälterquerschnitten hergestellt werden sollen. Die Anpassung ist auf verschiedene Weise möglich.

Bei der in den Fig. 1a und 1b dargestellten Ausführung weist der Dorn 9 umfangsseitige, in Fließrichtung sich erstreckende Vertiefungen 20 auf, die Dickstellen im Schmelzefluß erzeugen. Entsprechende Profilierungen können auch an der konischen Ringfläche des Düseneinsatzes 8 vorgesehen sein.

Gemäß einer bevorzugten Ausführung der Erfindung weisen die kegelförmige Mantelfläche des Dorns 9 und/oder die konische Fläche des Düseneinsatzes 8 ein den Schmelzefluß formendes, mit Vertiefungen versehenes Querschnittsprofil auf, wobei die Profiltiefe zum Düsenaustritt abnimmt, so daß mit einer die Düsenspaltbreite vergrößernden Stellbewegung WDS des Dorns 9 und/oder des Düseneinsatzes 8 die Profilierung des Düsenspaltes verstärkt und mit einer die Düsenspaltbreite reduzierenden entgegengesetzten Stellbewegung des Dorn 9 oder des Düseneinsatzes 8 zugleich die Profilierung des Düsenspaltes abgeschwächt wird. Eine entsprechende Ausführung ist in Fig. 2a dargestellt. Der Fig. 2a entnimmt man, daß die Profilierung des Dorns 9 eine zum Düsenaustritt abnehmende Profiltiefe 21 besitzt. Entsprechende Gestaltungen sind auch am Umfang des Düseneinsatzes 8 möglich.

Der Dorn 9 und/oder der Düseneinsatz 8 können auch mit einer flexiblen Manschette 10 zur Veränderung der Düsenspaltgeometrie versehen sein. Eine solche Ausführung ist in der Fig. 3a dargestellt. Der Dorn 9 besteht hier aus einem mit einer Stellstange 22 verbundenen Dornoberteil 23, einer endseitig an das Dornoberteil 23 angeschlossenen elastisch verformbaren Manschette 10 sowie einem an der Unterseite in die Manschette 10 einführbare sowie lösbar am Dornoberteil 23 befestigten Spreizkörper 24. Um Vorformlinge mit anderem Durchmesser herzustellen, müssen die Manschette 10 sowie der umfangsseitige ringförmige Düseneinsatz 8 ausgewechselt werden. Um Vorformlinge mit anderer Querschnittsform herzustellen, reicht es, den Spreizkörper 24 umzustellen oder auszutauschen.

Eine weitere konstruktive Möglichkeit, mit der unmittelbar am Düsenaustritt Einfluß auf die Schmelzeverteilung des Vorformlings genommen werden kann, ist in Fig. 5a dargestellt. Der Düseneinsatz 8 weist bei dieser Ausführung eine Profilierungseinrichtung 11 aus mindestens einem unterseitig am Umfang des Düsenspaltaustritts verstellbar angeordneten Element auf, welches in den Fließbereich der Schmelze eingreift.

Die in den Figuren einerseits dargestellten Stelleinrichtungen 5 oberhalb des Düseneinsatzes 8 und die in den Figuren dargestellten Maßnahmen zur Beeinflussung der Schmelzeverteilung unmittelbar am Düsenaustritt sind in beliebiger Weise miteinander kombinierbar. Den Figuren entnimmt man ferner, daß der Düseneinsatz 8 einteilig oder auch mehrteilig ausgebildet sein kann. Bei einer mehrteiligen Ausführung besteht der Düseneinsatz 8 aus zwei oder mehr aufeinanderliegenden Ringen. Die einzelnen Bauteile sind Teil eines Elementensatzes und können nach Maßgabe der zu fertigenden Behälter mit einander kombiniert werden.

Bei den in den Figuren 1a bis 6a und 1b bis 6b dargestellten Vorrichtungen weist die Ringspaltdüse 4 ein Düsenoberteil 6 und einen austauschbaren Düseneinsatz 8 auf. Bei dem in den Figuren 7a und 7b dargestellten Strangpreßkopf besteht die Ringspaltdüse 4 aus einem einteiligen Düsenkörper 26 sowie einem Dorn 9. Die Stelleinrichtung 5 ist oberhalb der Ringspaltdüse 4 im Gehäuse 1 angeordnet. Der Düsenkörper 26 sowie der Dorn 9 sind austauschbar. Sie weisen, wie zuvor am Beispiel des Düseneinsatzes und des Dorns beschrieben, ein Dick- und Dünnstellen im Schmelzefluß erzeugendes Querschnittsprofil auf oder sind mit einer flexiblen Manschette zur Veränderung der Düsenspaltgeometrie versehen oder sind mit einer in den Fließbereich eingreifenden, verstellbaren Profilierungseinrichtung ausgerüstet.

Die erfindungsgemäße Vorrichtung und das erfindungsgemäße Verfahren zeichnen sich durch beachtliche Vorteile aus. Sie ermöglichen die Fertigung von blasgeformten Kunststoffbehältern mit unterschiedlichen Behälterquerschnitten und einer in engen Toleranzen vorgegebenen Wandstärke. Die erforderlichen Umrüstungen beschränken sich auf einen Austausch des Düsenkörpers bzw. des Düseneinsatzes und/oder des Düsendorns oder auf Einstellungen an Stellelementen des Düsenkörpers oder des Düseneinsatzes bzw. des Dorns, welche die Geometrie des Düsenspaltes verändern. Kurze Wechselzeiten sind realisierbar. Bei der bevorzugten Ausführung können sogar die außenseitige Beheizung 25, wie in den Figuren dargestellt, an dem Strangpreßkopf verbleiben. Sofern der Düsenaustritt lediglich in bezug auf den Düsendurchmesser verändert werden muß, bietet es sich an, den Düseneinsatz sowie den Dorn durch in den Figuren gestrichelt dargestellte Adapterplatten zu verändern. Die Adaptionsteile bzw. Austauschteile sind angeschraubt oder können gegebenenfalls auch mit einem Schnellwechselsystem befestigt werden.

## Patentansprüche

1. Verfahren zum Extrusionsblasformen von Kunststoffbehältern mit unterschiedlichen Behälterquerschnitten, bei dem ein schlauchförmiger Vorformling aus einer thermoplastischen Kunststoffschmelze aus einem Strangpreßkopf, der einen ringförmigen Schmelzekanal und eine Ringspaltdüse mit verstellbarer Düsenspaltbreite aufweist, extrudiert und in einer Blasform zu einem Kunststoffbehälter aufgeweitet wird,
wobei die Düsenspaltbreite durch axiale Stellbewegungen eines Düsenkörpers oder eines Düseneinsatzes und/oder eines Dorns nach einem Wanddickenstellprogramm (WDS) während des Schlauchaustritts geregelt wird und
wobei die Schmelzeverteilung in Umfangsrichtung durch eine zusätzliche, auf den Schmelzekanal einwirkende Stelleinrichtung nach einem radialen Wanddickenstellprogramm (RWDS) geregelt wird,
**dadurch gekennzeichnet, daß** im wesentlichen nur die endseitigen Abschnitte des Vorformlings, die in der Blasform zu einem Behälteroberteil und Behälterunterteil aufgeweitet werden, nach dem radialen Wanddickenstellprogramm (RWDS) durch Stellbewegungen der Stelleinrichtung geformt werden, wobei die Stelleinrichtung oberhalb der Ringspaltdüse oder oberhalb eines austauschbaren Düseneinsatzes der Ringspaltdüse auf den Schmelzkanal einwirkt und in einer für verschiedene Größen und Formen des Behälterquerschnitts unveränderten Ausführung verwendet wird, und daß der Durchmesser und/oder die Geometrie des Düsenspaltes nach Maßgabe des zu fertigenden Behälterquerschnitts verändert wird, indem die Ringspaltdüse oder der Düseneinsatz und/oder der Dorn ausgetauscht oder Einstellungen an zusätzlichen, am Düsenaustritt oder düsenaustrittsnah angeordneten Stellelementen vorgenommen werden.

2. Strangpreßkopf zur Durchführung des Verfahrens nach Anspruch 1 mit
Gehäuse (1),
Pinole (2),
einem ringförmigen Schmelzekanal (3),
einer Ringspaltdüse (4), die ein an das Gehäuse (1) angeschlossenes Düsenoberteil (6), einen ringförmigen Düseneinsatz (8) sowie einen Dorn (9) aufweist, und
einer auf den Schmelzekanal (13) einwirkenden Stelleinrichtung (5) zur Veränderung der Schmelzekanalgeometrie,
wobei der Düseneinsatz (8) und der Dorn (9) einen Düsenspalt begrenzen, dessen Spaltbreite durch axiale Stellbewegungen des Düseneinsatzes (8) und/oder des Dorns (9) während der Extrusion eines thermoplastischen Vorformlings nach einem Wanddickenstellprogramm (WDS) regelbar ist und wobei die Stelleinrichtung (5) während der Extrusion des Vorformlings von einem radialen Wanddickenstellprogramm (RWDS) gesteuerte Stellbewegungen ausführt, **dadurch gekennzeichnet, daß** die Stelleinrichtung (5) oberhalb des Düseneinsatzes (8) auf den Schmelzekanal (3) einwirkt, daß der Düseneinsatz (8) und/oder der Dorn (9) ein Dick- und Dünnstellen im Schmelzefluß erzeugendes Querschnittsprofil aufweist oder mit einer flexiblen Manschette (10) zur Veränderung der Düsenspaltgeometrie versehen ist oder mit einer in den Fließbereich eingreifenden, verstellbaren Profilierungseinrichtung (11) ausgerüstet ist und daß der Düseneinsatz (8) und der Dorn (9) als ein- oder mehrteilige Bauteile ohne Ausbau des Düsenoberteils (6) und der Stelleinrichtung (5) auswechselbar sind.

3. Strangpreßkopf zur Durchführung des Verfahrens nach Anspruch 1 mit
Gehäuse (1),
Pinole (2),
einem ringförmigen Schmelzekanal (3),
einer Ringspaltdüse (4), die einen einteiligen Düsenkörper (26) sowie einen Dorn (9) aufweist, und
eine auf den Schmelzekanal (13) einwirkenden Stelleinrichtung (15) zur Veränderung der Schmelzekanalgeometrie,
wobei der Düsenkörper (26) und der Dorn (9) einen Düsenspalt begrenzen, dessen Spaltbreite durch axiale Stellbewegungen des Düsenkörpers (26) und/oder des Dorns (9) während der Extrusion eines thermoplastischen Vorformlings nach einem Wanddickenstellprogramm (WDS)regelbar ist und wobei die Stelleinrichtung (5) während der Extrusion des Vorformlings von einem radialen Wanddickenstellprogramm (RWDS) gesteuerte Stellbewegung ausführt, **dadurch gekennzeichnet, daß** die Stelleinrichtung (5) oberhalb der Ringspaltdüse (4) auf den Schmelzekanal (3) einwirkt, daß der Düsenkörper (26) und/oder der Dorn (9) ein Dick- und Dünnstellen im Schmelzefluß erzeugendes Querschnittsprofil aufweist oder mit einer flexiblen Manschette (10) zur Veränderung der Düsenspaltgeometrie versehen ist oder mit einer in den Fließbereich eingreifenden, verstellbaren Profilierungseinrichtung (11) ausgerüstet ist und daß der Düsenkörper (26) und der Dorn (9) ohne Ausbau der Stelleinrichtung (5) auswechselbar sind.

4. Strangpreßkopf nach Anspruch 2 oder 3, **dadurch gekennzeichnet, daß** die oberhalb des Düseneinsatzes (8) oder des Düsenkörpers (26) auf den Schmelzekanal (3) einwirkende Stelleinrichtung (5) einen als Hülse ausgebildeten Schieber (12) aufweist, der in der Pinole (2) axial beweglich geführt ist und eine kegelförmige Stirnfläche (13) aufweist, wobei die Stirnfläche (13) des Schiebers (12) und/oder ein gegenüberliegender konischer Abschnitt der Ringspaltdüse in Umfangsrichtung profiliert ist.

5. Strangpreßkopf nach Anspruch 4, **dadurch gekennzeichnet, daß** der Schieber (12) By-Pass-Kanäle aufweist.

6. Strangpreßkopf nach Anspruch 2 oder 3, **dadurch gekennzeichnet, daß** die Stelleinrichtung (5) einen im Düsenoberteil (6) oder im Gehäuse (1) axial beweglichen Stellring (18) aufweist, dessen konische Ringfläche (19) einen Wandabschnitt des Schmelzekanals bildet, wobei die konische Ringfläche (19) und/oder ein gegenüberliegender konischer Abschnitt der Pinole (2) in Umfangsrichtung profiliert ist.

7. Strangpreßkopf nach Anspruch 2 oder 3, **dadurch gekennzeichnet, daß** die auf den Schmelzekanal (3) einwirkende Stelleinrichtung (5) im Düsenoberteil (6) oder im Gehäuse (1) geführte, radial bewegliche Schieber (15) aufweist.

8. Strangpreßkopf nach Anspruch 2 oder 3, **dadurch gekennzeichnet, daß** die oberhalb des Düseneinsatzes (8) oder oberhalb des Düsenkörpers (26) auf den Schmelzekanal (3) einwirkende Stelleinrichtung (5) eine den Schmelzekanal begrenzende elastische Hülse (16) aufweist, die über im wesentlichen radiale Stellelemente (17) verformbar ist.

9. Strangpreßkopf nach einem der Ansprüche 2 bis 8, **dadurch gekennzeichnet, daß** die kegelförmige Mantelfläche des Dorns (9) und/oder die konische Fläche des Düseneinsatzes (8) bzw. des Düsenkörpers (26) ein den Schmelzefluß formendes, mit Vertiefungen versehenes Querschnittsprofil aufweist, wobei die Profiltiefe (21) zum Düsenaustritt abnimmt, so daß mit einer die Düsenspaltbreite vergrößernden Stellbewegung (WDS) des Dorns (9) und/oder des Düseneinsatzes (8) bzw. des Düsenkörpers (26) die Profilierung des Düsenspaltes verstärkt und mit einer die Düsenspaltbreite reduzierenden entgegengesetzten Stellbewegung des Dorns oder des Düseneinsatzes bzw. des Düsenkörpers zugleich die Profilierung des Düsenspaltes abgeschwächt wird.

10. Strangpreßkopf nach einem der Ansprüche 2 bis 8, **dadurch gekennzeichnet, daß** der Dorn (9) aus einem mit einer Stellstange (22) verbundenen Dornoberteil (23), einer endseitig an das Dornoberteil (23) angeschlossenen elastisch verformbaren Manschette (10) sowie einem an der Unterseite in die Manschette (10) einführbaren sowie lösbar am Dornoberteil (6) befestigten Spreizkörper (24) besteht.

11. Strangpreßkopf nach einem der Ansprüche 2 bis 8, **dadurch gekennzeichnet, daß** der Düseneinsatz (8), des Düsenkörpers und/oder der Dorn (9) eine Profilierungseinrichtung (11) aus mindestens einem unterseitig am Umfang des Düsenspaltaustritts verstellbar angeordneten Element aufweist, welches in den Fließbereich eingreift.

12. Strangpreßkopf nach einem der Ansprüche 2 bis 8, **dadurch gekennzeichnet, daß** der Düseneinsatz (8) aus mindestens zwei stirnseitig aufeinanderliegenden Ringen zusammengesetzt ist.

## Claims

1. A method for extrusion blow-moulding plastic receptacles with different receptacle cross sections, wherein a tubular parison of a molten thermoplastic plastic material is extruded from an extruding head with an annular channel for the molten mass and an annular gap nozzle with adjustable nozzle gap width, and wherein the tubular parison is widened into a plastic receptacle in a blowing mould,
with the nozzle gap width being regulated by axially adjusting a nozzle body or a nozzle insert and/or an arbor in accordance with a wall thickness adjusting program (WDS) during the extrusion of the tubular parison, and
with the distribution of the molten mass in the circumferential direction being regulated with an additional adjusting device that acts upon the channel for the molten mass in accordance with a radial wall thickness adjusting program (RWDS),
**characterized by** the fact that, in essence, only the end sections of the parison which are widened into an upper receptacle part and a lower receptacle part in the blowing mould are moulded by adjusting the adjusting device in accordance with the radial wall thickness adjusting program (RWDS), wherein the adjusting device acts upon the channel for the molten mass above the annular gap nozzle or above an exchangeable nozzle insert of the annular gap nozzle, and wherein the same adjusting device is used for different sizes and shapes of the receptacle cross section, and by the fact that the diameter and/or the geometry of the nozzle gap is varied depending on the receptacle cross section to be manufactured, namely by exchanging the annular gap nozzle or the nozzle insert and/or the arbor or by adjusting additional adjusting elements that are arranged at the nozzle outlet or near the nozzle the outlet.

2. An extruding head for carrying out the method according to Claim 1, comprising
a housing (1),
a barrel (2),
an annular channel (3) for the molten mass,
an annular gap nozzle (4) with an upper nozzle part (6) that is connected to the housing (1), an annular nozzle insert (8) and an arbor (9), and
an adjusting device (5) that acts upon the channel (13) for the molten mass in order to vary the channel geometry,
wherein the nozzle insert (8) and the arbor (9) limit a nozzle gap, the gap width of which can be regulated in accordance with a wall thickness adjusting program (WDS) by axially adjusting the nozzle insert (8) and/or the arbor (9) during the extrusion of the thermoplastic parison, and wherein the adjusting device (5) carries out adjusting movements that are controlled by a radial wall thickness adjusting program (RWDS) during the extrusion of the parison, **characterized by** the fact that the adjusting device (5) acts upon the channel (3) for the molten mass above the nozzle insert (8), by the fact that the nozzle insert (8) and/or the arbor (9) has a cross-sectional profile that produces thick and thin sections in the flow of the molten mass or is provided with the flexible collar (10) for varying the nozzle gap geometry or is equipped with an adjustable profiling device (11) that engages into the flow region, and by the fact that the nozzle insert (8) and the arbor (9) can be exchanged in the form of one or more components without having to detach the upper nozzle part (6) and the adjusting device (5).

3. The extruding head for carrying out the method according to Claim 1, comprising
a housing (1),
a barrel (2),
an annular channel (3) for the molten mass,
an annular gap nozzle (4) with a one-piece nozzle body (26) and an arbor (9), and
an adjusting device (15) [sic] that acts upon the channel (13) for the molten mass in order to vary the channel geometry,
wherein the nozzle body (26) and the arbor (9) limit a nozzle gap, the gap width of which can be regulated in accordance with a wall thickness adjusting program (WDS) by axially adjusting the nozzle body (26) and/or the arbor (9) during the extrusion of the thermoplastic parison, and wherein the adjusting device (5) carries out adjusting movements that are controlled by a radial wall thickness adjusting program (RWDS) during the extrusion of the parison, **characterized by** the fact that the adjusting device (5) acts upon the channel (3) for the molten mass above the annular gap nozzle (4), by the fact that the nozzle body (26) and/or the arbor (9) has a cross-sectional profile that produces thick and thin sections in the flow of the molten mass or is provided with the flexible collar (10) for varying the nozzle gap geometry or is equipped with an adjustable profiling device (11) that engages into the flow region, and by the fact that the nozzle body (26) and the arbor (9) can be exchanged without having to detach the adjusting device (5).

4. The extruding head according to Claim 2 or 3, **characterized by** the fact that the adjusting device (5) that acts upon the channel (3) for the molten mass above the nozzle insert (8) or the nozzle body (26) contains the slide (12) that is realized in the form of a sleeve and can be axially moved in the barrel (2), wherein said slide has a conical end face (13), and wherein the end face (13) of the slide (12) and/or a conical section of the annular gap nozzle situated opposite thereof is profiled in the circumferential direction.

5. The extruding head according to Claim 4, **characterized by** the fact that the slide (12) contains bypass channels.

6. The extruding head according to Claim 2 or 3, **characterized by** the fact that the adjusting device (5) contains an adjusting ring (18) that can be axially moved in the upper nozzle part (6) or in the housing (1) and the conical annular surface (19) of which forms a wall section of the channel for the molten mass, wherein the conical annular surface (19) and/or a conical section of the barrel (2) situated opposite thereof is profiled in the circumferential direction.

7. The extruding head according to Claim 2 or 3, **characterized by** the fact that the adjusting device (5) that acts upon the channel (3) for the molten mass contains radially movable slides (15) that are guided in the upper nozzle part (6) or in the housing (1).

8. The extruding head according to Claim 2 or 3, **characterized by** the fact that the adjusting device (5) that acts upon the channel (3) for the molten mass above the nozzle insert (8) or above the nozzle body (26) contains an elastic sleeve (16) that limits the channel for the molten mass and can be deformed with the aid of essentially radial adjusting elements (17).

9. The extruding head according to one of Claims 2-8, **characterized by** the fact that the conical surface area of the arbor (9) and/or the conical surface of the nozzle insert (8) or the nozzle body (26), respectively, has a cross-sectional profile that is provided with depressions and forms the flow of the molten mass, wherein the profile depth (21) decreases toward the nozzle outlet such that the profiling of the nozzle gap can be intensified if the arbor (9) and/or the nozzle insert (8) or nozzle body (26), respectively, is adjusted (WDS) in the direction in which the nozzle gap width is increased and the profiling of the nozzle gap can be diminished if the arbor or the nozzle insert or nozzle body, respectively, is adjusted in the opposite direction in which the nozzle gap width is reduced.

10. The extruding head according to one of Claims 2-8, **characterized by** the fact that the arbor (9) consists of an upper arbor part (23) that is connected to an adjusting rod (22), an elastically deformable collar (10) that is connected to the end face of the upper arbor part (23), and an expanding member (24) that can be inserted into the collar (10) on the lower side and is separably fixed on the upper arbor part (6).

11. The extruding head according to one of Claims 2-8, **characterized by** the fact that the nozzle insert (8) or nozzle body and/or the arbor (9) contains a profiling device (11) that consists of at least one element that is adjustably arranged on the underside of the nozzle gap outlet circumference and engages into the flow region.

12. The extruding head according to one of Claims 2-8, **characterized by** the fact that the nozzle insert (8) is composed of at least two rings, the end faces of which lie on top of one another.

## Revendications

1. Procédé d'extrusion-soufflage de récipients en matière plastique avec différentes sections de récipients, dans lequel une ébauche de forme tubulaire est extrudée hors d'une tête de coulée continue à partir d'une coulée de matière thermoplastique qui présente un canal de coulée de forme annulaire et une buse à fente annulaire avec une largeur de fente de buse réglable et est élargie dans un moule de soufflage pour former un récipient en matière plastique,
la largeur de la fente de buse étant réglée par des mouvements axiaux de réglage d'un corps de buse ou d'une garniture de buse et/ou d'un mandrin selon un programme de réglage d'épaisseur de paroi (PREP) pendant la sortie du tuyau et
la répartition de la coulée étant réglée dans le sens périphérique par un dispositif de réglage supplémentaire agissant sur le canal de coulée suivant un programme de réglage radial d'épaisseur de paroi (PRREP),
**caractérisé en ce que** substantiellement seules les sections du côté de l'extrémité de l'ébauche, qui sont élargies dans le moule de soufflage pour former une partie supérieure du récipient et une partie inférieure du récipient, sont formées suivant le programme de réglage radial d'épaisseur de paroi (PRREP) par des mouvements de réglage du dispositif de réglage, le dispositif de réglage agissant au dessus de la buse à fente annulaire ou au dessus d'une garniture de buse échangeable de la buse à fente annulaire sur le canal de coulée et étant utilisé sous forme d'un modèle inchangé pour différentes tailles et formes de section transversale du récipient, et que le diamètre et/ou la géométrie de la fente de buse sont modifiés en fonction de la section transversale de buse à fabriquer, en échangeant la buse à fente annulaire ou la garniture de buse et/ou le mandrin ou en procédant à des réglages sur des éléments supplémentaires de réglage disposés à la sortie de la buse ou près de sa sortie.

2. Tête de coulée continue pour la réalisation du procédé selon la revendication 1 comportant
un boîtier (1),
un fourreau (2),
un canal de coulée de forme annulaire (3),
une buse à fente annulaire (4), qui présente une partie supérieure de buse (6) raccordée au boîtier (1), une garniture de buse de forme annulaire (8) ainsi qu'un mandrin (9), et
un dispositif de réglage (5) agissant sur le canal de coulée (13) servant à modifier la géométrie du canal de coulée,
la garniture de buse (8) et le mandrin (9) délimitant une fente de buse dont la largeur de fente est réglable par des mouvements axiaux de réglage de la garniture de buse (8) et/ou du mandrin (9) pendant l'extrusion d'une ébauche thermoplastique suivant un programme de réglage d'épaisseur de paroi (PREP) et le dispositif de réglage (5) réalisant pendant l'extrusion de l'ébauche des mouvements de réglage commandés par un programme de réglage radial d'épaisseur de paroi (PRREP), **caractérisée en ce que** le dispositif de réglage (5) agit au dessus de la garniture de buse (8) sur le canal de coulée (3), que la garniture de buse (8) et/ou le mandrin (9) présente un profil de section transversale créant des points épais et minces dans le flux de coulée ou est muni d'un manchon flexible (10) servant à modifier la géométrie du profil de buse ou est équipé d'un dispositif de profilage réglable (11) empiétant dans la zone d'écoulement et que la garniture de buse (8) et le mandrin (9) sont échangeables en tant que composantes à pièce unique ou à pièces multiples sans démonter la partie supérieure de la buse (6) et le dispositif de réglage (5).

3. Tête de coulée continue pour la réalisation du procédé selon la revendication 1 comportant
un boîtier (1),
un fourreau (2),
un canal de coulée de forme annulaire (3),
une buse à fente annulaire (4), qui présente un corps de buse en une pièce (26) ainsi qu'un mandrin (9), et
un dispositif de réglage (15) agissant sur le canal de coulée (13) servant à modifier la géométrie du canal de coulée,
le corps de buse (26) et le mandrin (9) délimitant une fente de buse dont la largeur de fente est réglable par des mouvements axiaux de réglage du corps de buse (26) et/ou du mandrin (9) pendant l'extrusion d'une ébauche thermoplastique suivant un programme de réglage d'épaisseur de paroi (PREP) et le dispositif de réglage (5) réalisant pendant l'extrusion de l'ébauche des mouvements de réglage commandés par un programme de réglage radial d'épaisseur de paroi (PRREP), **caractérisée en ce que** le dispositif de réglage (5) agit au dessus de la fente annulaire de buse (4) sur le canal de coulée (3), que le corps de buse (26) et/ou le mandrin (9) présente un profil de section transversale créant des points épais et minces dans le flux de coulée ou est muni d'un manchon flexible (10) servant à modifier la géométrie de la fente de buse ou est équipé d'un dispositif de profilage réglable (11) empiétant dans la zone d'écoulement et que le corps de buse (26) et le mandrin (9) sont échangeables sans démonter le dispositif de réglage (5).

4. Tête de coulée continue selon la revendication 2 ou 3, **caractérisée en ce que** le dispositif de réglage (5) agissant au dessus de la garniture de buse (8) ou du corps de buse (26) sur le canal de coulée (3) présente un tiroir (12) configuré comme un tube qui est guidé de manière mobile dans le sens axial dans le fourreau (2) et une surface frontale de forme conique (13), la surface frontale (13) du tiroir (12) et/ou une section conique opposée de la buse à fente annulaire étant profilée dans le sens périphérique.

5. Tête de coulée continue selon la revendication 4, **caractérisée en ce que** le tiroir (12) présente des canaux de dérivation.

6. Tête de coulée continue selon la revendication 2 ou 3, **caractérisée en ce que** le dispositif de réglage (5) présente une bague de réglage (18) mobile dans le sens axial dans la partie supérieure de la buse (6) ou dans le boîtier (1), dont la surface annulaire conique (19) forme une section de paroi du canal de coulée, la surface annulaire conique (19) et/ou une section conique opposée du fourreau (2) étant profilée dans le sens périphérique.

7. Tête de coulée continue selon la revendication 2 ou 3, **caractérisée en ce que** le dispositif de réglage (5) agissant sur le canal de coulée (3) présente des tiroirs (15) mobiles dans le sens radial guidés dans la partie supérieure de la buse (6) ou dans le boîtier (1).

8. Tête de coulée continue selon la revendication 2 ou 3, **caractérisée en ce que** le dispositif de réglage (5) agissant au dessus de la garniture de buse (8) ou au dessus du corps de la buse (26) sur le canal de coulée (3) présente un manchon élastique (16) délimitant le canal de coulée, qui est déformable par l'intermédiaire de moyens de réglage (17) substantiellement radiaux.

9. Tête de coulée continue selon une des revendication 2 à 8, **caractérisée en ce que** la surface d'enveloppe de forme conique du mandrin (9) et/ou la surface conique de la garniture de buse (8) ou du corps de buse (26) présente un profil de section transversale formant le flux de coulée et muni de renfoncements, la profondeur de profil (21) diminuant vers la sortie de la buse, de sorte que le profilage de la fente de buse est renforcé par un moyen de réglage élargissant la largeur de la fente de buse (PREP) du mandrin (9) et/ou de la garniture de buse (8) ou du corps de buse (26) et qu'en même temps le profilage de la fente de buse est diminué par un mouvement de réglage opposé du mandrin réduisant la largeur de la fente de buse.

10. Tête de coulée continue selon une des revendication 2 à 8, **caractérisée en ce que** le mandrin (9) consiste en une partie supérieure de mandrin (23) reliée à une barre de réglage (22), un manchon élastiquement déformable (10) raccordé du côté de l'extrémité à la partie supérieure du mandrin (23) ainsi qu'en un corps d'écartement (24) pouvant être introduit du côté inférieur dans le manchon (10) et fixé de manière amovible à la partie supérieure du mandrin (6).

11. Tête de coulée continue selon une des revendication 2 à 8, **caractérisée en ce que** la garniture de buse (8) du corps de buse et/ou le mandrin (9) présente un dispositif de profilage (11) à partir d'au moins un élément disposé de manière réglable sur la périphérie de la sortie de la fente de buse qui empiète dans la zone d'écoulement.

12. Tête de coulée continue selon une des revendication 2 à 8, **caractérisée en ce que** la garniture de buse (8) est composée d'au moins deux bagues disposées l'une au dessus de l'autre du côté frontal.
